# EUROPÄISCHE PATENTSCHRIFT

(11) **EP 4 381 722 B1**
(45) Veröffentlichungstag und Bekanntmachung des Hinweises auf die Patenterteilung: **26.02.2025**
(21) Anmeldenummer: 23726047.6
(22) Anmeldetag: 10.05.2023
(51) Int. Cl.: H04L 67/125, H04L 67/12, H04L 67/60

(54) **VERFAHREN ZUR BESTIMMUNG EINES GEEIGNETEN ZEITPUNKTS ZUR ÜBERMITTLUNG VON DATENPAKETEN VON EINEM BACKEND AN WENIGSTENS EINE ERSTE STEUEREINRICHTUNG EINES KRAFTWAGENS**
METHOD FOR DETERMINING A SUITABLE TIME FOR TRANSMITTING DATA PACKAGES FROM A BACKEND TO AT LEAST ONE FIRST CONTROL UNIT OF A MOTOR VEHICLE
PROCÉDÉ DE DÉTERMINATION D'UN TEMPS APPROPRIÉ POUR TRANSMETTRE DES PAQUETS DE DONNÉES D'UN SYSTÈME PRINCIPAL À AU MOINS UNE PREMIÈRE UNITÉ DE COMMANDE D'UN VÉHICULE AUTOMOBILE

(30) Priorität: 24.05.2022 DE 102022001837
(43) Veröffentlichungstag der Anmeldung: 12.06.2024
(73) Patentinhaber: Mercedes-Benz Group AG, 70372 Stuttgart (DE)
(72) Erfinder: SCHMID, Kerstin, 71154 Nufringen (DE); GERSTER, Manuel, 88400 Biberach an der Riß (DE)
(74) Vertreter: Novagraaf Group
(86) Internationale Anmeldenummer: PCT/EP2023/062403
(87) Internationale Veröffentlichungsnummer: WO 2023/227371

(56) Entgegenhaltungen:
- EP-A1- 3 968 601
- JP-A- 2007 074 017
- US-A1- 2018 222 283
- US-A1- 2020 310 409
- ANONYMOUS: "Automatic repeat request - Wikipedia", 11 December 2021 (2021-12-11), pages 1 - 2, XP093055402, Retrieved from the Internet <URL:https://en.wikipedia.org/w/index.php?title=Automatic_repeat_request&oldid=1059778255> [retrieved on 20230619]

## Beschreibung

Die Erfindung betrifft Verfahren zur Übermittlung von Datenpaketen von einem Backend an wenigstens eine erste Steuereinrichtung eines Kraftwagens gemäß dem Oberbegriff von Patentanspruch 1.

Aktuelle Fahrzeuge beziehungsweise Kraftwägen verfügen über zahlreiche vernetzte Steuereinrichtungen beziehungsweise Steuergeräte, welche Daten mit einem Fahrzeug-Backend austauschen, wobei hier zwischen zwei Arten von Funktionalitäten unterschieden werden kann.

Einerseits kann ein solcher Austausch "offboard-getriggert" sein, das heißt, dass der Austausch außerhalb des Fahrzeugs ausgelöst wird. Der initiale Datenversand zur Realisierung entsprechender Funktionalitäten erfolgt vom Backend aus an das Fahrzeug. Der Gesamtablauf entspricht in der Regel einem (engl.) "Request/Response-Pattern", bei dem das Backend dem Fahrzeug ein Datenpaket sendet, ein Beispiel für (engl.) "Request" wäre ein Befehl zur Verriegelung des Fahrzeugs, und das Fahrzeug die erfolgreiche Verarbeitung des Datenpakets anschließend bestätigt, ein Beispiel für (engl.) "Response" wäre eine Bestätigung: "Fahrzeug erfolgreich verriegelt". Diese Funktionalitäten initiiert der Kunde nicht im/am Fahrzeug selbst, sondern über eine Remote-Schnittstelle, wie zum Beispiel eine Smartphone-App, entsprechend (engl.) "offboard".

Andererseits kann ein solcher Austausch "onboard-getriggert" sein, das heißt, dass der Austausch innerhalb des Fahrzeugs ausgelöst wird. Der initiale Datenversand zur Realisierung entsprechender Funktionalitäten erfolgt vom Fahrzeug aus an das Backend. Der Gesamtablauf entspricht in der Regel ebenfalls einem (engl.) "Request/Response-Pattern", bei dem das Fahrzeug dem Backend ein Datenpaket sendet, ein weiteres Beispiel für (engl.) "Request" wäre ein Befehl zur Aktualisierung von Statusdaten wie einen Zündungswechsel oder den Verriegelungsstatus, wobei das Backend dem Fahrzeug die erfolgreiche Verarbeitung des Datenpakets anschließend bestätigt (engl.) "response". Diese Funktionalitäten werden entweder vom Kunden im/am Fahrzeug initiiert, wenn beispielsweise der Kunde das Fahrzeug entriegelt, oder vom Fahrzeug selbst initiiert, wenn beispielsweise der Batteriestand sinkt, entsprechend (engl.) "onboard".

Das Backend kommuniziert in der Regel nicht direkt mit der Steuereinrichtung, welche das Datenpaket im Fahrzeug verarbeitet, sondern über eine sogenannte Telekommunikationseinheit (TCU), die über ein Mobilfunkmodul verfügt. Die TCU stellt zwar eine abgesicherte Verbindung zum Backend sicher, aber die eingesetzten Protokolle garantieren keine erfolgreiche Übermittlung beziehungsweise Zustellung des Datenpakets, zumindest nicht auf applikativer Ebene. Zudem können Nachrichten von der TCU nur empfangen werden, wenn diese erreichbar ist. So ist es gemäß heutigem Stand der Technik möglich, dass ein Datenpaket auf dem Kommunikationsweg verloren geht, und zwar sowohl auf dem Weg vom Backend in Richtung Steuereinrichtung als auch in die entgegengesetzte Richtung.

Aufgrund von äußeren Einflüssen besteht die Möglichkeit, dass im Falle von offboard-getriggerten Funktionalitäten Datenpakete dem Fahrzeug nicht zugestellt werden können, wie beispielsweise bei fehlender oder schlechter Mobilfunkverbindung. Dennoch gibt es Datenpakete, die einem Fahrzeug für die erfolgreiche Bereitstellung diverser offboardgetriggerter Kundenfunktionalitäten zwingend zugestellt werden müssen. Abhängig von der Kundenfunktionalität muss die Zustellung der Datenpakete aber nicht zwingend unmittelbar erfolgen.

In der JP 2007 074017 A wird ein Fernsteuersystem mit einer Konfiguration offenbart, um die Anwendung der Fernsteuerung auf Fahrzeugvorrichtungen ordnungsgemäß auszuführen. In dem Fernsteuersystem, in dem die Fernsteuerung auf eine an Bord befindliche Stromversorgung angewendet wird, erfolgt die Ausführung durch die Anforderung an ein Fahrzeug, die Fernsteuerung der an Bord befindlichen Vorrichtung über eine Zentrale von einem vom Fahrzeugbenutzer bedienten Bedienungsterminal aus zu tätigen.

In der US 9 179 488 B2 ist bereits ein Verfahren zum Wiederherstellen einer zellularen Verbindung zwischen einer Fahrzeugtelematikeinheit und einem drahtlosen Trägersystem offenbart. Dieses Verfahren umfasst das Erfassen eines Verlustes der zellularen Verbindung zwischen einer Fahrzeugtelematikeinheit und einem drahtlosen Trägersystem sowie das Zugreifen auf eine Technologiebestellungstabelle (TOT), die eine Vielzahl von Funkzugangstechnologien (RATs) entsprechend der Erwünschtheit ordnet, die wiederum zur Verwendung bei der Fahrzeugtelematikeinheit fähig sind. Ebenso versucht das Verfahren die zellulare Verbindung wiederherzustellen, insbesondere durch verschiedene Verfahrensschritte.

Aus der US 2019/0141023 A1 ist ein Verfahren zum Konfigurieren eines Zugangs zu einem Fahrzeugnetzwerk von einer mobilen Vorrichtung bekannt. Im Falle eines auftretenden Fehlers wird hierbei eine entsprechende Signalisierungssequenz erneut gestartet.

Die US 2015/0133108 A1 offenbart ein Verfahren zur Offboard-Steuerung einer Telematikeinheit eines Fahrzeugs durch ein Backend. Ein erneutes Senden einer Anfrage wird kurz angesprochen ohne auf weitere Ausführungen hierzu einzugehen.

Aufgabe der Erfindung ist es, ein Verfahren bereitzustellen, bei welchem an das Fahrzeug übermittelte, aber nicht zugestellte Datenpakete an einem geeigneten Zeitpunkt erneut an das Fahrzeug übermittelt werden, sodass die Datenpakete mit höherer Wahrscheinlichkeit vom Fahrzeug empfangen werden.

Diese Aufgabe wird mittels eines Verfahrens mit den Merkmalen des Patentanspruchs 1 gelöst. Vorteilhafte Ausgestaltungen mit zweckmäßigen Weiterbildungen der Erfindung sind in den übrigen Patentansprüchen angegeben.

Die Erfindung betrifft ein Verfahren zur Bestimmung eines geeigneten Zeitpunkts zur Übermittlung von Datenpaketen von einem Backend an wenigstens eine erste Steuereinrichtung eines Fahrzeugs, insbesondere eines Kraftwagens, insbesondere eines Personenkraftwagens, zur Steuerung wenigstens einer Funktionalität der wenigstens einen Steuereinrichtung. Hierbei werden Datenpakete zwischen dem Backend und der wenigstens einen Steuereinrichtung übermittelt und empfangen, wobei das Auslösen der Übermittlung offboard und/oder onboard getriggert wird. Es ist ebenso möglich, sämtliche Datenpakete an verschiedene Steuereinrichtungen zur Steuerung verschiedener Funktionalität zu übermitteln, wobei die Übermittlungsstruktur beispielsweise mit einer Priorisierung versehen wird.

Um die Aufgabe der Erfindung zu lösen, ist es erfindungsgemäß vorgesehen, dass bei einer offboard-getriggerten Übermittlung wenigstens eines Datenpakets an die erste Steuereinrichtung ein Timer ausgelöst wird, in welchem eine Bestätigungsinformation über das Empfangen des übermittelten offboard-getriggerten Datenpakets durch das Backend abgewartet wird. Hierbei wird bei Empfangen der Bestätigungsinformation die Steuerung der Funktionalität bestätigt und bei einem nicht Empfangen der Bestätigungsinformation das Datenpaket in einem Zwischenspeicher des Backends für eine zukünftige Übermittlung zwischengespeichert. Die zwischengespeicherten Datenpakete werden, bei einer onboard-getriggerten Übermittlung weiterer Datenpakete von selbiger oder einer weiteren Steuereinrichtung an das Backend, erneut an die erste Steuereinrichtung übermittelt. Insbesondere soll der Timer ermöglichen, dass aus Sicht des Backends nicht an das Fahrzeug zugestellte Nachrichten beziehungsweise nicht an die jeweilige Steuereinrichtung übermittelte Datenpakete zu einem geeigneten Zeitpunkt erneut gesendet/übermittelt werden. Über den Timer wird erkannt, dass eine Nachricht sehr wahrscheinlich nicht zugestellt wurde. Die erneute Übermittlung zu einem geeigneten Zeitpunkt wird über die onboard-getriggerte Nachricht und den Zwischenspeicher ermöglicht.

Die Lösung zum Bestimmen eines geeigneten Zeitpunkts für den erneuten Versand von Datenpaketen im Falle von offboard-getriggerten Funktionalitäten erfolgt mit Zuhilfenahme der onboard-getriggerten Funktionalitäten und unter der Annahme, dass die Kommunikation zwischen Backend und Fahrzeug über ein Request/Response-Pattern erfolgt und das Fahrzeug damit umgehen kann, dieselben Datenpakete mehrmals zu erhalten. In anderen Worten löst die onboard-getriggerte Funktionalität einen erneuten Versuch aus, die nicht übermittelten Datenpakete bei der fehlgeschlagenen offboard-getriggerten Funktionalität zu übermitteln. Bleibt die Response im Falle einer offboard-getriggerten Funktionalität für einen gewissen Zeitraum beziehungsweise nach Ablauf des Timers aus, muss im Backend davon ausgegangen werden, dass das entsprechende Datenpaket das Fahrzeug beziehungsweise die eine Steuereinrichtung nicht erreicht hat. Das Backend muss das für das Fahrzeug beziehungsweise für die eine Steuereinrichtung bestimmte Datenpaket deshalb zwischenspeichern.

Der geeignete Zeitpunkt beziehungsweise Auslöser für den erneuten Versand beziehungsweise für die erneute Übermittlung des Datenpakets ist dann der erfolgreiche Empfang von Datenpaketen, die das Fahrzeug beziehungsweise die jeweiligen Steuereinrichtungen im Rahmen einer onboard-getriggerten Funktionalität an das Backend versenden. Der Versand dieser Datenpakete wird vom Fahrzeug oder der jeweiligen Steuereinrichtungen selbst und somit unabhängig von der offboard-getriggerten Funktionalität ausgelöst, zum Beispiel, wenn der Kunde das Fahrzeug entriegelt oder einen Zündungswechsel vornimmt und erfolgt in der Regel in einem anderen Kontext als der der offboard-getriggerten Funktionalität. Der Empfang eines Datenpakets des Fahrzeugs beziehungsweise der jeweiligen Steuereinrichtungen rechtfertigt die Annahme, dass das Fahrzeug beziehungsweise die Steuereinrichtungen wieder erreichbar ist/sind und somit auch vom Backend versendete Datenpakete mit einer sehr hohen Wahrscheinlichkeit empfangen werden. Das heißt, dass die Wahrscheinlichkeit zu einer einzelnen Übermittlung ohne Abfrage geringer ist als die des erfindungsgemäßen Verfahrens, da hier wenigstens eine weitere Übermittlung durchgeführt wird.

In einer vorteilhaften Ausgestaltung der Erfindung ist es vorgesehen, dass eine Überprüfung über eine Notwendigkeit der erneut übermittelten Datenpakete durchgeführt wird. Dies bedeutet, dass im Zwischenspeicher gewisse Funktionalitäten auf deren Notwendigkeit zu dem Zeitpunkt, an dem die onboard-getriggerte Funktionalität erscheint, überprüft werden. Beispielsweise ist eine Absicherung eines Schlosses nach einsteigen in das Auto nicht weiter notwendig, wodurch diese wieder aus dem Zwischenspeicher gelöscht werden kann. Zur Absicherung der Sicherheit kann hierbei beispielweise jede nicht erfolgte Funktionalität protokolliert werden und zur weiteren Verarbeitung gespeichert werden, wodurch weniger Speicherplatz als auch Arbeitsspeicher benötigt wird.

In einer weiteren vorteilhaften Ausgestaltung der Erfindung ist es vorgesehen, dass der Zwischenspeicher nach einer erfolgreichen onboard-getriggerten Übermittlung gelöscht wird. Die Löschung des Zwischenspeichers kann hierbei sowohl als direkte Konsequenz der onboard-getriggerten Funktionalität als auch als zeitlich versetzte Konsequenz durchgeführt werden, wobei die Vorgabe zum Löschen vom OEM vorgegeben wird. Insbesondere soll hierbei die Sicherheit des Fahrzeugs priorisiert sein.

Weiterhin vorteilhaft hat sich eine Ausgestaltung der Erfindung erwiesen, in welcher bei nicht bestätigten Übermittlungen von offboard-getriggerten Datenpaketen eine Information darüber an einen Datenempfänger übermittelt wird. Dies ist aufgrund der Sicherheitsvorkehrung auf applikativer Ebene von Vorteil, da hierbei ein Nutzer der Applikation eine Warnung empfängt, sobald das Backend eine Bestätigungsinformation empfängt. So kann dies bei verschiedenen Funktionalitäten zu einer höheren Sicherheit führen, beispielweise bei nicht erfolgtem Zusperren des Fahrzeugs.

Schließlich ist es in einer vorteilhaften Ausgestaltung der Erfindung vorgesehen, dass nach einer bestätigten onboard-getriggerten Übermittlungen von Datenpaketen ein weiterer zweiter Timer und/oder weitere Timer ausgelöst wird/werden, in welchem die Bestätigungsinformation über das Empfangen des zuvor zwischengespeicherten Datenpakets der offboard-getriggerten Übermittlung durch das Backend erneut abgewartet wird, und bei einem erneuten nicht Empfangen ein Signal zum Auslösen einer Fehlermeldung erzeugt wird. Die Fehlermeldung bestätigt zu einer gewissen Wahrscheinlichkeit eine mögliche Unterbrechung einer Schnittstelle zwischen Backend und Steuereinrichtung und weist den Nutzer oder den OEM darauf hin, dass eine mögliche physische Verbindung/Schnittstellen oder weitere Komponenten defekt ist/sind.

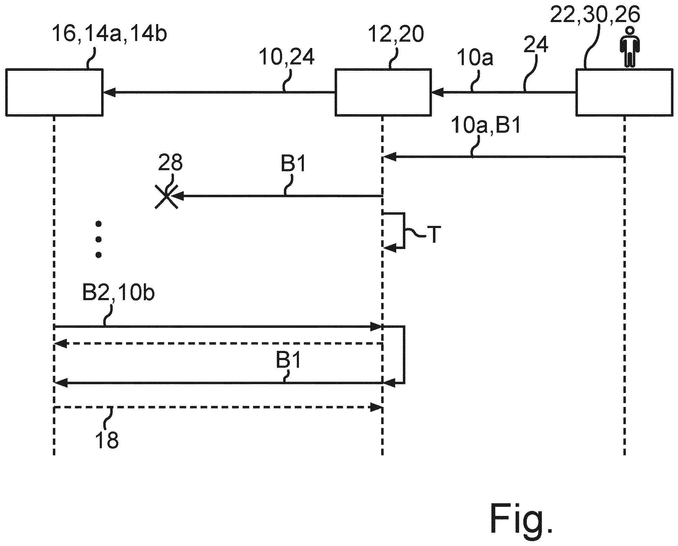

Diese Erfindung ist aus dem Gebiet der Telematik und beschreibt ein Verfahren, welches es erlaubt, aus Sicht eines Fahrzeug-Backends nicht an das Fahrzeug zugestellte Nachrichten zu einem geeigneten Zeitpunkt erneut an das Fahrzeug zu senden. Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Figur (Fig.) ein schematisches Bilddiagramm zur Darstellung eines erfindungsgemäßen Verfahrens. In den Figuren sind gleiche und funktionsgleiche Elemente mit den gleichen Bezugszeichen versehen.

In der einzigen Figur (Fig.) wird ein Beispiel zur Anwendung des Erfindungsgemäßen Verfahrens dargestellt, bei welchem zur Bestimmung eines geeigneten Zeitpunkts zur Übermittlung von Datenpaketen 10 von einem Backend 12 an wenigstens eine erste Steuereinrichtung 14a eines Fahrzeugs 16, insbesondere eines Kraftwagens, zur Steuerung wenigstens einer Funktionalität der wenigstens einen Steuereinrichtung 14a. Es werden die Datenpakete 10 zwischen dem Backend 12 und der wenigstens einen Steuereinrichtung 14a übermittelt und empfangen, wobei das Auslösen der Übermittlung offboard B1 und/oder onboard B2 getriggert wird. Bei einer offboard-getriggerten B1 Übermittlung wenigstens eines Datenpakets 10 an die erste Steuereinrichtung 14a wird ein Timer T ausgelöst, in welchem eine Bestätigungsinformation 18 über das Empfangen des übermittelten offboard-getriggerten B1 Datenpakets 10 durch das Backend 12 abgewartet wird, wobei bei Empfangen der Bestätigungsinformation 18 die Steuerung der Funktionalität bestätigt wird und bei einem nicht Empfangen der Bestätigungsinformation 18, und somit bei einer Übermittlung einer Nichtbestätigungsinformation 28, das Datenpaket 10 in einem Zwischenspeicher 20 des Backends 12 für eine zukünftige Übermittlung zwischengespeichert wird. Die Nichtbestätigungsinformation 28 vom Fahrzeug 16 an das Backend 12 ist insbesondere der Ablauf des Timers T, welche an weitere Entitäten weitergegeben werden kann. Schließlich werden die zwischengespeicherten Datenpakete 10 bei einer onboard-getriggerten B2 Übermittlung weiterer Datenpakete 10b an die wenigstens eine Steuereinrichtung 14a erneut übermittelt.

Die einzige Figur (Fig.) bedient sich hierbei an einem Beispiel, bei welchem ein Kunde/Nutzer 22 eine als Vorklimatisierung dargestellte Funktionalität seines als Elektrofahrzeug ausgebildetes Fahrzeug 16 über die Smartphone-App 26 des OEM so konfiguriert haben will, dass die Vorklimatisierung an einem vorgegebenen Nachmittag um 14 Uhr im Fahrzeug 16 aktiviert wird, wobei es sich über eine offboard-getriggerte B1 Übermittlung von Datenpaketen 10 für diese Funktionalität handelt. Hierbei wird für die Vorklimatisierung ein Vorklimatisierungsbefehl 24 über das Backend 12 an das Fahrzeug 16 übermittelt. Hierbei wird zunächst ein Anfrage-Datenpaket 10a an das Backend 12 gesendet, anschließend dieses als Befehlsdatenpaket ausgebildete Datenpaket 10 vom Backend 12 an das Fahrzeug 16 und/oder der Steuereinrichtung 14a gesendet. In anderen Worten unterscheiden sich die Datenpakete 10, 10a, darin, dass zwischen Fahrzeug 16 und Backend 12 das Befehlsdatenpaket beziehungsweise Datenpaket 10 und zwischen Backend 12 und Kunde/Nutzer 22 das Datenpaket 10a gelten.

Sobald der Kunde/Nutzer 22 eine gewünschte Aktivierungszeit in der Smartphone-App 26 konfiguriert, sendet das Backend 12 ein entsprechendes Datenpaket 10 mit einem Vorklimatisierungsbefehl 24 zur Konfiguration der Vorklimatisierung an das Fahrzeug 16, das unter anderem die Aktivierungszeit enthält. Sollte das Backend 12 die erwartete Bestätigungsinformation 18 beziehungsweise ein (engl.) "response" auf das versendete Datenpaket 10 innerhalb eines gewissen Zeitraums beziehungsweise innerhalb des Timers T nicht erhalten, ist davon auszugehen, dass das Datenpaket 10 das Fahrzeug 16 beziehungsweise die Steuereinrichtung 14a nicht erreicht hat und die Vorklimatisierung 24 nicht dem Kundenwunsch entsprechend konfiguriert wurde.

Anstatt das Datenpaket 10 in zyklischen Zeitabständen an das Fahrzeug 16 beziehungsweise an die Steuereinrichtung 14a zu senden oder den Kunde/Nutzer 22 die Konfiguration der Aktivierungszeit erneut durchführen zu lassen, wartet das Backend 12 gemäß dem vorliegenden Verfahren ab, bis es vom Fahrzeug 16 ein weiteres Datenpaket 10b erhält, welches im Rahmen einer onboard-getriggerten B2 Funktionalität versendet wurde, zum Beispiel wenn das zum Laden angeschlossene Fahrzeug 16 einen neuen Ladezustand an das Backend 12 sendet. Dieses nicht mit der Vorklimatisierung 24 in Kontext stehende Datenpaket 10b löst somit eine Wiederholung des zwischengespeicherten Datenpakets 10 aus, welches mit sehr hoher Wahrscheinlichkeit vom Fahrzeug 16 beziehungsweise von der Steuereinrichtung 14a empfangen wird und somit zu einer Konfiguration der Vorklimatisierung 24 im Fahrzeug 16 und einer entsprechenden Bestätigungsinformation 18 an das Backend 12 führt.

## Patentansprüche

1. Verfahren zur Bestimmung eines geeigneten Zeitpunkts zur Übermittlung von Datenpaketen (10) von einem Backend (12) an wenigstens eine erste Steuereinrichtung (14a) eines Kraftwagens (16) zur Steuerung wenigstens einer Funktionalität der wenigstens einen Steuereinrichtung (14a), bei welchem Datenpakete (10) zwischen dem Backend (12) und der wenigstens einen Steuereinrichtung (14a) übermittelt und empfangen werden, wobei die Übermittlung offboard (B1) und/oder onboard (B2) getriggert wird,
**dadurch gekennzeichnet, dass**
bei einer offboard-getriggerten (B1) Übermittlung wenigstens eines Datenpakets (10) an die erste Steuereinrichtung (14a) ein Timer (T) ausgelöst wird, in welchem eine Bestätigungsinformation (18) über das Empfangen des wenigstens einen übermittelten und offboard-getriggerten (B1) Datenpakets (10) durch das Backend (12) abgewartet wird, wobei bei einem Empfangen der Bestätigungsinformation (18) die Steuerung der Funktionalität bestätigt wird und bei einem nicht Empfangen der Bestätigungsinformation (18) das wenigstens eine Datenpaket (10) in einem Zwischenspeicher (20) des Backends (12) für eine zukünftige Übermittlung zwischengespeichert wird, und das wenigstens eine zwischengespeicherte Datenpaket (10), bei einer onboard-getriggerten (B2) Übermittlung weiterer Datenpakete (10b) an das Backend (12), erneut an die Steuereinrichtung (14a) übermittelt wird.

2. Verfahren nach Anspruch 1,
**dadurch gekennzeichnet, dass**
eine Überprüfung über eine Notwendigkeit des wenigstens einen erneut übermitteltes Datenpakets (10) durchgeführt wird.

3. Verfahren nach einem der vorgehenden Ansprüche 1 und 2,
**dadurch gekennzeichnet, dass**
der Zwischenspeicher (20) nach einer erfolgreichen onboard-getriggerten (B2) Übermittlung von Datenpakete (10b) gelöscht wird.

4. Verfahren nach einem der vorgehenden Ansprüche,
**dadurch gekennzeichnet, dass**
bei nicht bestätigten offboard-getriggerten (B1) Übermittlungen von Datenpakete (10) eine Nichtbestätigungsinformation (28) an einen Datenempfänger (30) übermittelt wird.

5. Verfahren nach einem der vorgehenden Ansprüche 2 bis 4,
**dadurch gekennzeichnet, dass**
nach einer bestätigten onboard-getriggerten (B2) Übermittlungen von Datenpakete (10b) ein weiterer zweiter Timer ausgelöst wird, in welchem die Bestätigungsinformation (18) über das Empfangen des zuvor zwischengespeicherten Datenpakets (10) der offboard-getriggerten (B1) Übermittlung durch das Backend (12) erneut abgewartet wird, und bei einem erneuten nicht Empfangen ein Signal zum Auslösen einer Fehlermeldung erzeugt wird.

## Claims

1. Method for determining a suitable time for transmitting data packets (10) from a backend (12) to at least one first control device (14a) of a motor vehicle (16) for controlling at least one functionality of the at least one control device (14a), in which data packets (10) are transmitted and received between the backend (12) and the at least one control device (14a), wherein the transmission is triggered offboard (B1) and/or onboard (B2),
**characterized in that**
an offboard-triggered (B1) transmission of at least one data packet (10) to the first control device (14a) results in a timer (T) being initiated, in which confirmation information (18) about the reception of the at least one transmitted and offboard-triggered (B1) data packet (10) is awaited by the backend (12), wherein reception of the confirmation information (18) results in the control of the functionality being confirmed and non-reception of the confirmation information (18) results in the at least one data packet (10) being temporarily stored in a cache (20) of the backend (12) for future transmission, and the at least one temporarily stored data packet (10) is retransmitted to the control device (14a) in the event of an onboard-triggered (B2) transmission of further data packets (10b) to the backend (12).

2. Method according to claim 1,
**characterized in that**
a check is carried out as to the necessity of the at least one retransmitted data packet (10).

3. Method according to either of the preceding claims 1 and 2,
**characterized in that**
the cache (20) is deleted after a successful onboard-triggered (B2) transmission of data packets (10b).

4. Method according to any of the preceding claims,
**characterized in that**
in the event of unconfirmed offboard-triggered (B1) transmissions of data packets (10), non-confirmation information (28) is transmitted to a data receiver (30).

5. Method according to any of the preceding claims 2 to 4,
**characterized in that**
after a confirmed onboard-triggered (B2) transmissions of data packets (10b), a further second timer is initiated, in which the confirmation information (18) about the reception of the previously temporarily stored data packet (10) of the offboard-triggered (B1) transmission is again awaited by the backend (12), and, if it is not received again, a signal for initiating an error message is generated.

## Revendications

1. Procédé permettant de déterminer un moment approprié pour la transmission de paquets de données (10) d'un programme dorsal (12) à au moins un premier dispositif de commande (14a) d'un véhicule automobile (16) pour la commande d'au moins une fonctionnalité de l'au moins un dispositif de commande (14a), dans lequel des paquets de données (10) sont transmis et reçus entre le programme dorsal (12) et l'au moins un dispositif de commande (14a), dans lequel la transmission est déclenchée sans être à bord (B1) et/ou à bord (B2),
**caractérisé en ce que**
lors d'une transmission déclenchée sans être à bord (B1) d'au moins un paquet de données (10) au premier dispositif de commande (14a), une minuterie (T) est déclenchée, lors de laquelle est attendue une information de confirmation (18) concernant la réception par le programme dorsal (12) de l'au moins un paquet de données (10) transmis et déclenché sans être à bord (B1), dans lequel, lors de la réception de l'information de confirmation (18), la commande de la fonctionnalité est confirmée et, lors de la non-réception de l'information de confirmation (18), l'au moins un paquet de données (10) est mémorisé temporairement dans une mémoire temporaire (20) du programme dorsal (12) pour une transmission future, et l'au moins un paquet de données (10) mémorisé temporairement est à nouveau transmis au dispositif de commande (14a) lors d'une transmission déclenchée à bord (B2) d'autres paquets de données (10b) au programme dorsal (12).

2. Procédé selon la revendication 1,
**caractérisé en ce que**
une vérification est effectuée en ce qui concerne une nécessité de l'au moins un paquet de données (10) transmis de nouveau.

3. Procédé selon l'une des revendications précédentes 1 et 2,
**caractérisé en ce que**
la mémoire temporaire (20) est effacée après une transmission de paquets de données (10b) déclenchée à bord (B2) avec succès.

4. Procédé selon l'une des revendications précédentes,
**caractérisé en ce que**
dans le cas de transmissions déclenchées sans être à bord (B1) non confirmées de paquets de données (10), une information de non-confirmation (28) est transmise à un récepteur de données (30).

5. Procédé selon l'une des revendications précédentes 2 à 4,
**caractérisé en ce que**
après une transmissions déclenchée à bord (B2) confirmée de paquets de données (10b), une autre seconde minuterie est déclenchée, lors de laquelle l'information de confirmation (18) concernant la réception du paquet de données (10) précédemment mémorisé temporairement de la transmission déclenchée sans être à bord (B1) est à nouveau attendue par le programme dorsal (12), et en cas de nouvelle non-réception, un signal est généré pour déclencher un message d'erreur.
